# EUROPEAN PATENT SPECIFICATION

(11) **EP 3 523 213 B1**
(45) Date of publication and mention of the grant of the patent: **16.02.2022**
(21) Application number: 17781079.3
(22) Date of filing: 04.10.2017
(51) Int. Cl.: B65D 51/28, B65D 41/62, B65D 47/08

(54) **CONTAINER ASSEMBLY**
BEHÄLTER
RÉCIPIENT

(30) Priority: 05.10.2016 US 201615285578
(43) Date of publication of application: 14.08.2019
(73) Proprietor: MJN U.S. Holdings LLC, Evansville, Indiana 47721 (US)
(72) Inventor: LOVE, Margo Elaine, Evansville, Indiana 47721 (US); OZADALI, Ferhan, Evansville, Indiana 47721 (US)
(74) Representative: Carlin, Robert George
(86) International application number: PCT/EP2017/075269
(87) International publication number: WO 2018/065499

(56) References cited:
- EP-A2- 2 700 589
- WO-A1-03/051744
- WO-A1-2016/015085
- DE-A1-102010 022 945
- US-A1- 2006 249 473
- US-A1- 2009 260 999

## Description

### TECHNICAL FIELD

The present disclosure relates generally to the construction of containers and, more particularly to the construction of a container assembly.

### BACKGROUND OF THE DISCLOSURE

Infants and individuals who have special dietary needs, are convalescing or who are otherwise vulnerable to sicknesses, can require highly nutritive liquid food products and food supplement products. Being highly nutritive, some of these food products present preferential growth sites for fungi, bacteria and other microbes that could infect or sicken intended recipients. Accordingly, to minimize the risk of sickness and infections, these highly nutritive food products are preferably prepared, maintained and delivered very hygienically and under conditions designed to inhibit microbial growth. For example, the product and the storage containers in which the product is kept can be sterilized and the product packaged into the storage containers under aseptic conditions to remove microbes that could grow in the product. In these aseptic procedures, a food or beverage product is sterilized by quick exposure to ultra-high heat, rapidly cooled to an ambient temperature, and filled into sterilized containers that are then sealed in a commercially sterile environment. However, conditions for packaging, storing and delivering the product should not be so harsh as to damage the food product by destroying its flavor, texture or unduly diminishing its nutritive value.

Aseptic packaging techniques typically require that the packaging take place in a sterile environment. Manufacturers commonly package their products in pre-sterilized containers capable of providing a shelf life of 150 days or more. For the aseptic packaging of food products, aseptic fillers generally use FDA (Food and Drug Administration) approved sterilants, meet FDA quality control standards, use sterile production line enclosures or clean rooms, and aseptically treat all packaging material. The food product should also be processed using an "Ultra High Temperature" (UHT) pasteurization process to meet FDA aseptic standards. The packaging material should remain in a sterile environment during filling, closure, and sealing operations.

In one example of an aseptic process in which bottles to be used for liquid food storage are sterilized and filed with the liquid food product, the aseptic process applies a hot atomized sterilant, such as hydrogen peroxide spray, onto the interior surface of each container, and subsequently activates and removes the sterilant in drying stations using hot sterile air. Hydrogen peroxide breaks down into water and oxygen, and thus oxidizes and kills microbes such as bacteria within the container. To achieve aseptic sterilization, a minimum container temperature is developed and held for a predetermined period of time (e.g., 131° F. for 5 seconds) after application of the sterilant. After container drying, the residual hydrogen peroxide in the container is below a predetermined level (e.g., about 0.5 PPM (parts per million)).

Other container components, such as container closures and products to be stored in the containers can also be aseptically processed or otherwise sterilized. However, microbes may be removed from these other components using different aseptic processes that take account of the difficulty of removing, location, type and quantity of the microbes, the ability of the component to withstand the conditions it may experience during the aseptic process without damage, as well as the speed and cost of aseptic processing.

Liquid infant formula is one food that conventionally has been aseptically packaged in bottles and similar containers. It is a manufactured food generally designed and marketed for feeding to babies and infants. Commonly used infant formulas include purified cow's milk whey and casein as a protein source, a blend of vegetable oils as a fat source, lactose as a carbohydrate source, a vitamin-mineral mix, and other ingredients depending on the manufacturer. In addition, there are infant formulas using soybean as a protein source in place of cow's milk and formulas using protein hydrolyzed into its component amino acids for infants who are allergic to other proteins. The liquid infant formula ingredients are typically mixed according manufacturer-specific procedures with specific temperatures and durations, after which the mixture can be pasteurized, homogenized, standardized and packaged.

Liquid and solid food product has also conventionally been sterilized using retort packaging processes. In these retort processes, food is filled into a pouch, metal can, or other suitable container, sealed, and then heated to extremely high temperatures, rendering the product commercially sterile. When manufacturing infant formula, the infant formula is generally sterilized together with its packaging after it is filled in its retail container. During sterilization, the filled retail containers are heated and cooled to destroy any contained microorganisms. The finished containers can then be packed in cartons and stored for shipping.

However, these infant formula products may be missing ingredients that are normally present in natural breast milk, such as the transferrin protein lactoferrin, or that may otherwise be beneficial for the infant, such as probiotics like the lactic acid bacterium *Lactobacillus rhamnosus* Gorbach & Goldin (LGG). These missing ingredients can be added as supplements to the infant formula.

Some potential supplements are heat sensitive or are otherwise adversely affected by the severe conditions that may be present during aseptic processing and packaging or retort processing after packaging. Exposure to excessive heat can kill the heat sensitive bacterium and diminish the functionality of the heat sensitive protein in the supplement. Adding these supplements can require more difficult and costly aseptic filtration and dosing processes that may increase manufacturing costs and make the product too expensive for needy users. A need exists to improve available packaging techniques for high nutritive liquid food products so that heat sensitive ingredients and supplements can be included while the liquid is rendered shelf-stable, while maintaining the ease for users to prepare the packaged product for consumption. US 2006/249473 A1 describes a bottle or container closure for a precise addition of a contents constituent includes a lower part having internal threads for a leak-proof application for the bottle or container, in which the lower part of the closure includes, in a clearance area, a chamber that can be closed with a membrane liner opening toward the bottom of the closure, which has a dome-shaped top side that includes a penetrating pin projecting downwardly inside the dome-shaped top side.

WO 03/051744 A1 describes a package for keeping two substances separate prior to use. The package includes a primary container for storing a first substance and having an opening, a secondary container for storing a second substance and having an opening, the secondary container is integrally formed and its opening is sealed by a breakable seal, the secondary container is arranged to be removably engaged with the first container so that the breakable seal keeps the contents of the primary and secondary containers separate.

US 2009/260999 A1 describes a sleeved to press-open type storage device with a prestressed to open closure having the closure and one side of the storage device connectedly attached by a flexible flake type structure.

### BRIEF SUMMARY OF THE DISCLOSURE

Various embodiments relate to aspects of providing a closure for a container that stores a nutritive liquid food product with a heat sensitive supplement. In some embodiments, the closure can include a sealed secondary chamber in which heat sensitive supplements can be stored. A separate first or main chamber in the container can contain the remaining liquid ingredients of the nutritive liquid food product, which can be filled aseptically in the main chamber or sterilized in the main chamber by retort processing. A membrane, such as a metallic foil or polymeric film can be attached across an aperture of the container as a microbe barrier that maintains the sterility of the first chamber's contents. The closure can be attached to the container as a further barrier and protection for the liquid food product and the heat sensitive supplement in the container assembly. Prior to use, heat sensitive ingredients in the closure's sealed chamber can be conveniently combined with the nutritive liquid food product and dispensed from the container. After dispensing some of the product the closure can reseal the container to store the remaining product for later use. Some embodiments can include additional features to facilitate convenient preparation of the packaged product for use.

In the main embodiment, the disclosure provides a container assembly including a container having a first chamber formed from a base wall and at least one sidewall that extends from the base wall to surround the first chamber. The sidewall has an aperture into the first chamber. The container assembly further includes a closure attached to the aperture. The closure has a collar surrounding a passage that extends through the aperture to the first chamber and a hingedly connected lid that can be moved between an open and closed position that occludes the passage. The closure also includes a second chamber separated from the first chamber by a barrier wall that is openable to permit material flow between the first and second chambers.

According to one aspect of this embodiment, the first chamber of the container assembly can be sterile. Also, the second chamber of the container assembly is formed integrally with the collar such that it partially occludes the passage and the second chamber includes a second chamber top wall that is depressible, in use, to rupture the barrier wall wherein said barrier wall is configured to rupture by an increasing fluid pressure in the second chamber generated by depression of the second chamber top wall. Additionally the collar can include a spout to facilitate pouring fluid from the container assembly.

According to another aspect of this container assembly, the barrier wall of the second chamber can be a removable seal. In another option not covered by the invention the second chamber can include a member coupled to the second chamber top wall that is configured to penetrate the barrier wall when the second chamber top wall is depressed. Further, the container sidewall can include a first male threaded connector surrounding the aperture, and the collar can include a second female threaded connector that can coupled together to attach the collar to the container.

According to another aspect of the container assembly, the first chamber can include a liquid infant formula and the second chamber can include a heat sensitive infant formula nutritive supplement. Optionally the heat sensitive infant formula nutritive supplement can be lactoferrin.

In another embodiment, the disclosure provides a closure for a container not covered by the invention including a collar having a collar wall surrounding a passage. The collar wall extends between a lower opening and an upper opening of the passage and is adapted to sealably couple a periphery of the lower opening to a container aperture. The closure also includes a lid hinged to the collar and movable between a closed position, which covers and seals the collar upper opening, and an open position, which permits a fluid entering the passage from one of the lower and upper opening to flow out of the other opening. The closure further includes a compartment that encloses a chamber and extends from the collar into the passage, the compartment having a barrier wall that seals the chamber from the passage. The barrier wall can be unsealed to expose the chamber to the passage.

The chamber can contain any substance that can beneficially be stored separately from the liquid product in the first chamber. Optionally, the chamber can contain a heat sensitive nutritive supplement. Specifically, in some embodiments, the heat sensitive nutritive supplement can be lactoferrin.

In alternative closure according to this embodiment, the compartment can include a depressible top wall that a user can depress to unseal the barrier wall. Optionally, the barrier wall can be configured to unseal by rupturing as a result of an increased internal compartment pressure generated when the depressible top wall is depressed. According to an alternative option, the barrier wall can be configured to unseal by rupturing as a result of a member coupled to the depressible top wall penetrating the barrier wall when the depressible top wall is depressed. In a still further alternative, the barrier wall can be a removable seal having a tab that a user can pull to unseal the barrier wall.

### BRIEF DESCRIPTION OF THE SEVERAL VIEWS OF THE DRAWINGS

Fig. 1 is a side cross sectional view of a container assembly according to an embodiment of the present disclosure.
Fig. 2A is a detailed side cross-sectional view of a closure according to one embodiment not covered by the invention of the present disclosure.
Fig. 2B is a perspective view of the closure of Fig. 2A.
Fig. 3 is a side cross-sectional view of a closure according to an alternative embodiment of the present disclosure.
Fig. 4 is a side cross-sectional view of the closure of Fig. 3 showing a depressed top wall and a ruptured barrier wall.
Fig. 5 is a side cross-sectional view of a closure according to a further embodiment not covered by the invention.
Fig. 6 is a side cross-sectional view of the closure of Fig. 5 showing a depressed top wall and a ruptured barrier wall.
Fig. 7 is a top view of a length of one embodiment not covered by the invention of a selectively reinforced film.
Fig. 8 is a top view of a die cut piece of the length of the selectively reinforced film of Fig. 7.
Fig. 9 is a side cross-sectional view of a closure according to a further embodiment of the present disclosure.
Fig. 10 is a side cross-sectional view of a closure according to yet another embodiment of the present disclosure.

### DETAILED DESCRIPTION OF THE DISCLOSURE

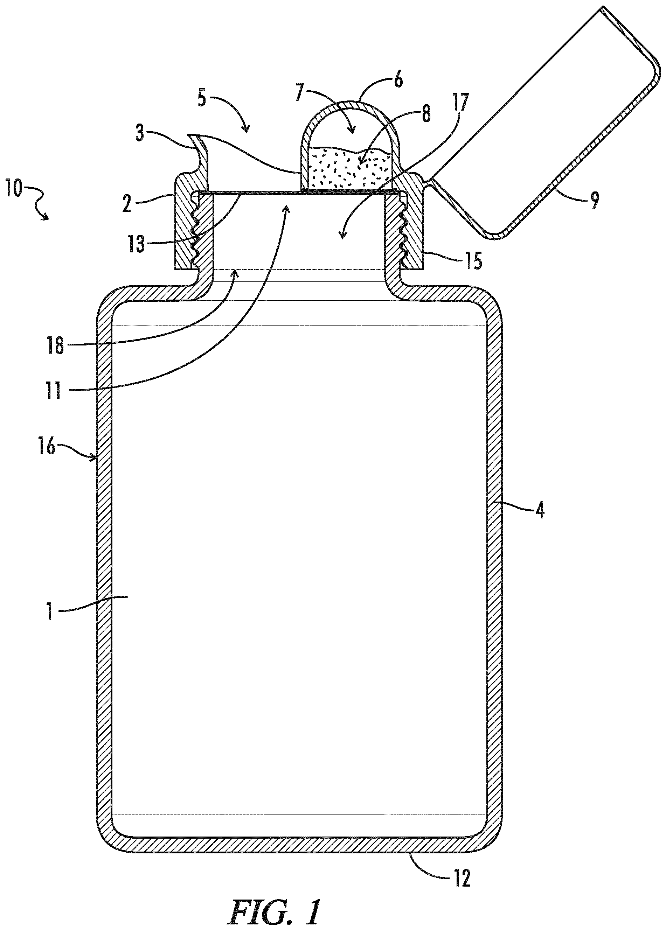

A side cross sectional view of a container assembly 10 according to an embodiment of the present disclosure is shown in Fig. 1. The container assembly 10 includes a container 16 having a base wall 12 and container sidewall 4 that extends from the perimeter of base wall 12 to surround a first chamber 1. It will be understood that if container 16 is cylindrical, sidewall 4 can comprise a single circular wall panel. However, containers that have a polygonal cross section, such as rectangular or hexagonal, can have a sidewall 4 comprised of multiple planar panels. In any event, sidewall 4 surrounds first or primary chamber 1 and forms an aperture 11 through which product can be added to or dispensed from the first chamber 1. In the embodiment of Fig. 1, sidewall 4 narrows to form a neck as it extends towards aperture 11.

A closure 2 is attached at the aperture 11 of the container and includes a collar that surrounds a passage 17. The collar is formed by collar wall 15 which extends between lower opening 18 and upper opening 5 of passage 17. Lid 9 is hinged to the collar so that lid 9 can move between a closed position and an open position. In the closed position, lid 9 extends to seal across upper opening 5 and second chamber 7 of the closure 2 to prevent fluid flow into or out of first chamber 1 through upper opening 5. Chamber 7 extends from collar wall 15 part of the way across passage 17, but does not completely occlude passage 17 so that a sufficient opening exists for fluid passing through opening 18 and passage 17 to exit through upper opening 5. Closure 2 further includes a spout 3 to facilitate pouring liquid food product from closure 2.

Container 16, including base wall 12 and sidewall 4 can be constructed of materials commonly used in similar containers for storing liquid food products, such as metals, polymers and combinations thereof. Suitable polymers can include, for example, polypropylene, high-density polyethylene, low-density polyethylene, polystyrene-acrylonitile, acrylonitile-butadiene-styrene, styrene-maleicanhydride, polycarbonate, polyethylene terephthalate, polyvinylcyclohexane, and blends and/or layers thereof. First chamber 1 of container 16 can be used to store a highly nutritive liquid food product, such as liquid infant formula by aseptic or retort processes. It will be understood that filling first chamber 1 can be performed using conventional liquid filling equipment commonly used in the food and beverage industry. The container 16 and its contents can be sterilized under aseptic or retort processing conditions by heating and subsequently cooling the container 16 and its contents as is known in the art. Once container 16 is filled, a membrane 13 acting as a microbe barrier can be attached across aperture 11 to prevent contamination and loss of sterile conditions of container 16 contents.

Closure 2, including collar wall 15 and lid 9 top wall 6 of second chamber 7 can be constructed of materials commonly used in similar closures. Suitable materials can include polymers, such as polypropylene, high-density polyethylene, low-density polyethylene, polystyrene-acrylonitile, acrylonitile-butadiene-styrene, styrene-maleicanhydride, polycarbonate, polyethylene terephthalate, polyvinylcyclohexane, and blends thereof. Second chamber 7 can be used to aseptically store a nutritive supplement 8 sealed separately from first chamber 1. As such, second chamber 7 is preferably enclosed by top wall 6 as well as a barrier wall that separates second chamber 7 from passage 17.

Stored nutritive supplement 8 can be a liquid, gel or solid heat sensitive material that would likely deteriorate under the aseptic processing of the fluid in first chamber 1 and that would preferably flow into passage 17 if the barrier wall were ruptured or removed. In some embodiments, nutritive supplement 8 is a probiotic, such as LGG, or a beneficial protein such as the transferrin protein lactoferrin. Because nutritive supplement 8 is filled and stored in closure 2 separately from the liquid food product in container 16, it can be stored under conditions that minimize microbial growth as compared to the conditions in the first chamber. Accordingly, even substances that are not heat sensitive, but that could reduce microbial growth or otherwise increase shelf life of the overall product can advantageously be stored in the second chamber.

It will be understood that according to one option, nutritive supplement 8 can be formulated as a particulate heat sensitive nutritive infant formula supplement. The dry conditions under which supplement 8 can optionally be stored in second chamber 7 inhibits or prevents the growth of microbes. Subsequently, after the first container is filled with the liquid food product under sterile conditions and closed with container seal 13 to maintain sterility, closure 2 with filled second chamber 7 can be mated to container 16 as shown in Fig. 1, to form container assembly 10.

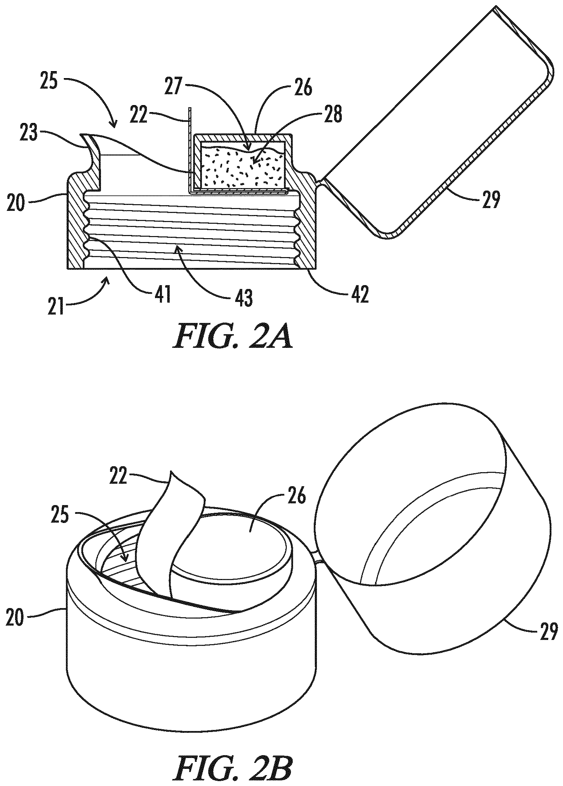

Referring now to Fig. 2A, an alternative embodiment not covered by the invention of a closure 20 includes a collar formed by collar wall 42 which extends between lower opening 21 to upper opening 25 to surround passage 43. Closure 20 also includes a threaded connection 41 on the inner surface of collar wall 42 that faces passage 43. Lid 29 is hinged to collar wall 42 thereby attaching lid 29 to closure 20 and permitting lid 29 to move between an open and closed position, similar to lid 9 shown in Fig. 1. Closure 20 further includes a spout 23 to facilitate pouring liquid food product from closure 20.

Second chamber 27 of closure 20 is formed by top wall 26 and enclosed by a barrier wall. In the embodiment not covered by the invention of Fig. 2A, barrier wall can be a removable seal 22 which can be made from a polymer film, a metallic foil or metalized film, paper, or similar material bonded across an opening in top wall 26. Together with top wall 26, removable seal 22 encloses nutritive supplement within second chamber 27. Removable seal 22 provides a sealed barrier between the second chamber 27 and passage 43. As further shown in Fig. 2A, a portion of removable seal 22 can be directly bonded to the opening in top wall 26, and a remaining tail portion can be folded back on itself to form a tab that extends through upper opening 25 of closure 20.

Fig. 2B is a perspective view of closure 20 of Fig. 2A showing the tab of removable seal 22 protruding through upper opening 25. When configured in this way, the tab is positioned so that a user can conveniently pull the tab to remove seal 22. As will be understood by those skilled in the art, the removable seal 22 should be bonded and folded so that when a user pulls on the tab, the tab peels the removable seal 22 away from the opening in top wall 26 to which it is bonded, rupturing the seal and permitting nutritive supplement 28 to flow or fall into passage 43 or further into first chamber 1 of container 16, where it can combine with the liquid food product.

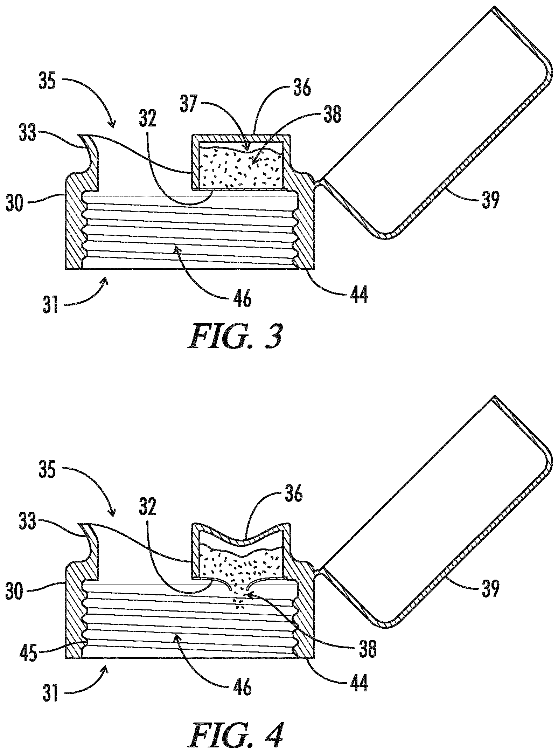

Fig. 3 illustrates another embodiment not covered by the invention of a closure 30. Similar to the embodiment of Figs. 2A & 2B, closure 30 includes a collar formed by collar wall 44 which extends between lower opening 31 to upper opening 35 to surround passage 46. Closure 30 can also include a threaded connection 45 on the inner surface of collar wall 44 that faces passage 46. Lid 39 is hinged to collar wall 44 thereby attaching lid 39 to closure 30 and permitting lid 39 to move between an open and closed position, similar to lid 9 shown in Fig. 1. Closure 30 can further include a spout 33 to facilitate pouring liquid food product from closure 30.

Second chamber 37 of closure 30 is formed by top wall 36 and enclosed by a barrier wall. In the embodiment of Fig. 3, barrier wall can be a seal 32 which can be made from a polymer film, a metallic or metalized foil, paper, or similar material. As shown in Fig. 4, seal 32 can be designed to rupture or break open so that the nutritive supplement 38 stored in second chamber 37 can be readily discharged into passage 46 to mix with a liquid food product. In this embodiment, top wall 36 includes at least one portion that is deformable, as shown in Fig. 4. Preferably, the deformable portion of the top wall 36 can be resiliently deformed by a user pressing on an external surface of the sidewall using a finger.

When pressed by a user, top wall 36 should be depressed significantly so as to compress the contents and increase the pressure within second chamber 37. At the deformable portion, top wall 36 should be sufficiently resilient so as not to crack or rupture when depressed, yet sufficiently deformable under the force of a user's finger to generate the desired pressure increase in the second chamber 37. Preferably, seal 32 should not be so readily deformable as top wall 36 and should present a relatively unyielding barrier against which internal pressure of second chamber 37 can build. However, seal 32 should be designed to break and rupture rapidly, and reasonably predictably, when a desired internal pressure is reached, thereby readily ejecting the pressurized contents of second chamber 37.

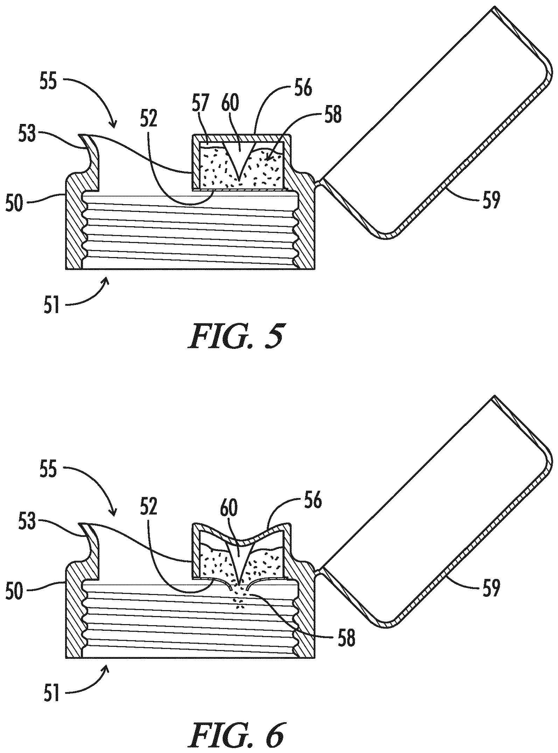

Fig. 5 illustrates yet another embodiment not covered by the invention, which is similar to closure 30 of Figs. 3 and 4. Unlike closure 30, however, closure 50 of Fig. 5 and Fig 6 includes a member 60 which is coupled at one end to a deformable portion of top wall 56 of closure 50. According to one embodiment, the free end of member 60 that is not coupled to top wall 56 can include a sharp edge or point, so that as top wall 56 is depressed and pressure builds within second chamber 57, the free end of member 60 begins to penetrate a barrier wall. Here the barrier wall can be a seal 52 which can be made from a polymer film, a metallic foil or metalized film, paper. When top wall 56 is sufficiently depressed and pressure has built sufficiently within second chamber 57, member 60 ruptures barrier wall 52 and discharges the nutritive supplement contents 58 of second chamber 57 into the passage of closure 50. Nutritive supplement 58 can then fall through lower opening 51 to mix with the liquid in an attached container. The mixture can be discharged by flowing back through lower opening 51 and upper opening 55 to be dispensed.

To facilitate predictable and effective rupturing or breaking so that the contents of second chamber are easily ejected, the barrier wall of the various embodiments can be selectively reinforced. The film or foil of the barrier wall can have a patterned coating that adds additional thickness, strength or toughness to the coated areas, leaving the uncoated areas more easily rupturable by comparison. Foils or films used in the barrier wall can be metallic foils, paper, or polymer films, such as polypropylene, polyethylene terephthalate (PET), nylon, polyethylene and cast polypropylene, for example. Foils or films can be made of a combination of these materials that are mixed together or laminated to form the base foil or membrane material. The base foils or films can further be metalized or coated, for example, by applying a polymeric or resinous material by printing, coating, spraying or hot stamping and may bond through cooling, curing (such as ultra violet curing) or drying. Patterned masks on the film surface can be used limit the film surfaces on which the coating is deposited.

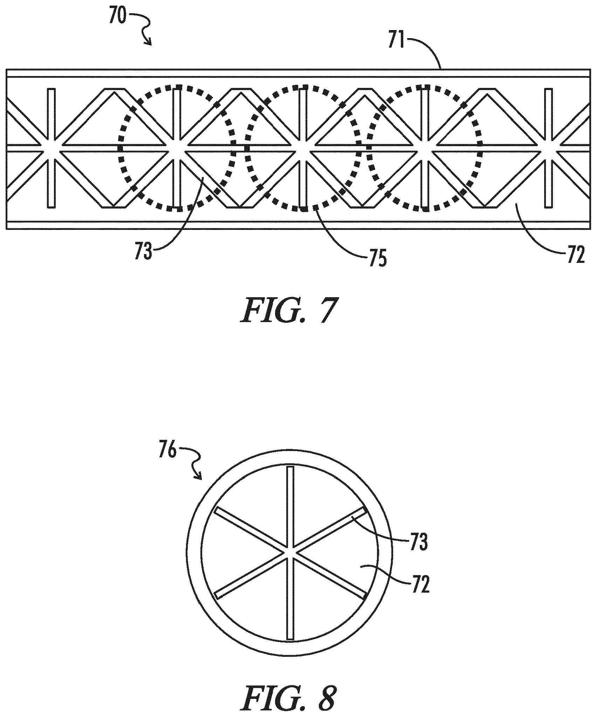

Fig. 7 shows one embodiment not covered by the invention of how such a portion of selectively reinforced film or foil 70 can be made. A mask can be placed onto an exposed surface of a length of base, uncoated foil or polymeric film 71. The mask is patterned so as to cover the surfaces of the base foil or polymeric film 71 that are to remain uncoated. The masked base foil or polymeric film 71 is subject to the application process so that a selected material is deposited onto the exposed surfaces of the masked base foil or polymeric film 71 which, in Fig. 7, is illustrated by the shaded areas. Once the deposition process is completed, the mask can be removed to provide a selectively reinforced foil or film 70 with a reinforcing coating 72 (depicted by the shaded areas of Fig. 7) and the more easily ruptured unreinforced areas 73 (depicted by the unshaded portions). Repeating patterns of reinforcing coating 72 and unreinforced areas 73 can thus be made along the length of the foil or film 70 to facilitate continuous production along a production line. Individual based wall pieces can be marked (depicted by dotted lines 75) along the length of the web and die cut into individual pieces 76 for use as barrier walls. It will be understood that similar reinforcement coatings can be made on base films and foils by other processes, such as printing, spraying and laminating the reinforcement coating material onto the base film or web. The reinforcement coating can be formed of polymers, resins, fibers or other metals.

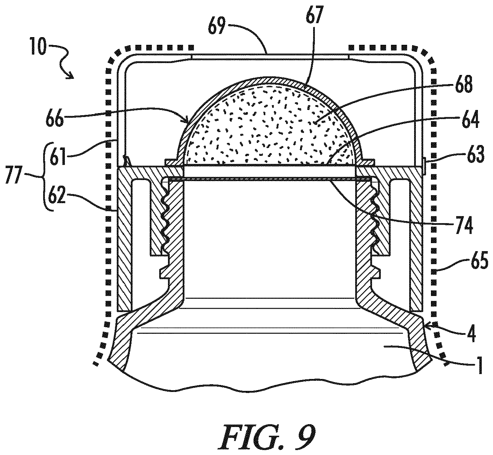

Fig. 9 presents a further embodiment in which a closure 77, including a lid 61 connected by hinge 63 to collar 62, has a view window 69 that permits a user to view inside closure 77 to see a top wall 67 of second chamber 66. In the embodiment of Fig. 9, view window 69 is formed on the top of lid 61. However, the precise placement of view window 69 is not critical so long as the user can view at least a portion of sidewall to confirm that it has not been depressed, indicating that the second chamber likely contains undispensed nutritive supplement 68, and that the contents of the container assembly 10 are likely fresh and unused. Closure 77 can further include a paper or polymer film label or wrapping 65 covering closure 77 with the exception of the view window 69.

To facilitate seeing through view window 69, view window 69 can be made from a transparent polymer. Optionally view window 69 can be made the same polymer material as closure 60 but without dyes or other materials that may make the material of view window 69 opaque. As a further option, view window 69 can have a thinner cross section to enhance its transparency or can even be an opening in the outer wall of the closure that is covered with a clear label. As with the closures of the other embodiments, the second chamber can include a barrier wall 64 that can be a rupturable or removable seal. Closure 60 is shown attached to a threaded connection at an opening defined by container sidewall 4. Container sidewall 4 defines a first chamber 1 of the container. It will be understood that view window 69 of the present embodiment can similarly be applied to other embodiments of the closure and container assembly described herein. Similar to the embodiment of Fig. 1, the aperture or opening to first chamber 1 can be sealed by a container seal 74 attached across the opening of first chamber 1.

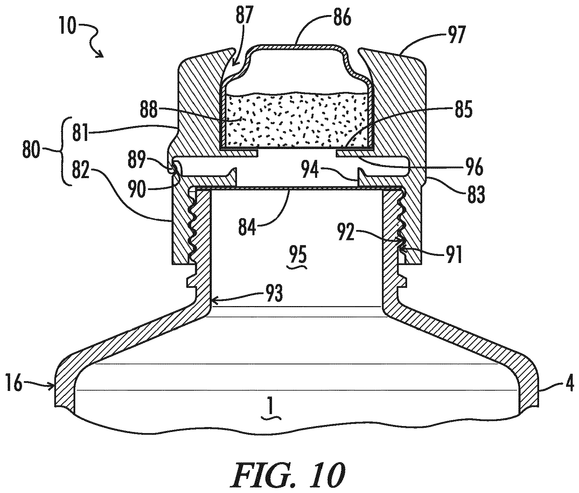

Referring now to Fig. 10, a container assembly 10 includes a container 16 attached to closure 80. Closure 80 includes a lid 81 connected to collar 82 via a living hinge 83 as can be employed in the other embodiments described herein. Container wall 4 surrounds first chamber 1 and narrows to form a neck 93 which defines an opening 95 to the first chamber 1. A container thread 92 can be formed on the outer circumferential surface of the neck 93 to mate with a complementary collar thread 91 on the inner surface of collar 82, as shown in Fig. 10. Living hinge 83, which can be made from the same material as collar 82 and lid 81, permits the lid to move from a closed position (as shown in Fig. 10), to an open position when pouring liquid food product from first chamber 1.

A lower edge of lid 81 opposite living hinge 83 forms a lid lip 89 having a cam or protrusion designed to engage an opposing cam, protrusion or recess in a collar lip 90 as lid 81 is rotated to a closed position to snap lid 81 shut against collar 82. Collar lip 90 extends from an upper edge of collar 82 opposite living hinge 83. By engaging with each other, lid lip 89 and collar lip 90 can hold lid 81 in a closed position over collar 82. But it should be understood lips 89 and 90 are just one exemplary method of holding lid 81 closed and that other closing and locking mechanisms known in the art can be used instead of or in addition to the mechanisms described.

First chamber 1 can be filled with a desired liquid product as previously described. Once first chamber 1 is filled, closure 80 can be attached to container 16 via container thread 92 of neck 93 to seal opening 95 and prevent microbes and other contaminants from entering first chamber 1. Container seal 84 is attached to container 16, as shown in Fig. 10, to seal across container opening 95 as a barrier to microbes or oxygen from entering or water vapor from exiting, where such microbes, oxygen or water vapor have managed to enter the space between lid 81 and collar 82, by for example, passing through small gaps between the lower edge of lid 81 and the upper edge of collar 82.

In the embodiment of Fig. 10, a second chamber formed by sidewall 86 sealed against barrier wall 85 is disposed within a lid chamber 87 of lid 81. Lid chamber 87 is a cavity that extends through lid 81 between a top wall 97 and a bottom wall 97. The second chamber can include nutritive supplement 88. Nutritive supplement 88 can be a probiotic, such as LGG, or a beneficial protein such as the transferrin protein lactoferrin. Nutritive supplement 88 can be more specifically formulated as a particulate heat sensitive nutritive infant formula supplement. Top wall 86 and barrier wall 85 can comprise similar materials and structures of the sidewalls and barriers of any of the other previously described embodiments. However, in this embodiment, portions of top wall 86 or barrier wall 85 are firmly attached to lid chamber 87 so that when the contents of the second chamber are dispensed, the remnants of the barrier wall 85 and sidewall 86 remain attached to the lid chamber 87 and sidewall provides a continuous seal across lid chamber 87.

To mix and dispense the contents of the container assembly 10 of Fig. 10, a user unscrews closure 80 to remove it from container 16 and expose container seal 84. The user then peels away container seal 84 to unseal container 16 and replaces the closure 80. Next, user discharges nutritive supplement 88 from the second chamber by depressing sidewall 86. It should be understood that second chamber's recessed position within lid chamber 87 can provide some protection from inadvertent discharge of the second chamber during manufacture, shipment and storage. Accordingly, discharging the contents of second chamber may require a user to insert a finger into the lid chamber 87 to depress top wall 86 to rupture barrier wall 85 as described in other embodiments. With barrier wall 85 ruptured, nutritive supplement 88 can be discharged though collar orifice 94 and opening 95 to mix with liquid in the first chamber 1. To dispense the mixture from the container assembly 10, the user pulls lid 81 open, overcoming the resistance of the snap fitting lid lip 89 to disengage it from collar lip 90 permitting the mixture to flow out through opening 95 and collar orifice 94 when poured from the container 16.

Thus, although there have been described particular embodiments of the present invention, it is not intended that such references be construed as limitations upon the scope of the invention as set forth in the following claims.

## Claims

1. A container assembly (10) comprising:
a container (16) having a first chamber formed from a base wall (12) and a container sidewall (4) that extends from the base wall (12) to surround the first chamber (1), the container sidewall (4) defining an aperture (11) into the first chamber (1);
a closure (2) attached to the aperture (11), the closure including a collar surrounding a passage (17) that extends through the aperture to the first chamber (1), the collar having a hingedly connected lid (9) that is movable between an open and closed position to occlude the passage (17);
wherein the closure includes a second chamber (7) separated from the first chamber (1) by a barrier wall that is openable to permit material flow between the first and second chambers and wherein the second chamber (7) is formed integrally with the collar and partially occludes the passage; **characterised in that** the second chamber (7) includes a second chamber top wall (6) that is depressible, in use, to rupture the barrier wall wherein said barrier wall is configured to rupture by an increasing fluid pressure in the second chamber (7) generated by depression of the second chamber top wall (6).

2. The container assembly according to claim 1, wherein a container seal (13) seals the container opening.

3. The container assembly according to claim 1 or claim 2, wherein the container sidewall (4) includes a first threaded connection surrounding the aperture, and the collar includes a second threaded connection coupled to the first threaded connection.

## Patentansprüche

1. Behälteranordnung (10), umfassend:
einen Behälter (16), der eine erste Kammer aufweist, die aus einer Basiswand (12) und einer Behälterseitenwand (4), die sich von der Basiswand (12) erstreckt, um die erste Kammer (1) zu umgeben, gebildet ist, wobei die Behälterseitenwand (4) eine Öffnung (11) in die erste Kammer (1) definiert;
einen Verschluss (2), der an der Öffnung (11) angebracht ist, wobei der Verschluss einen Bund beinhaltet, der einen Durchgang (17) umgibt, der sich durch die Öffnung zu der ersten Kammer (1) erstreckt, wobei der Bund einen gelenkig verbundenen Deckel (9) aufweist, der zwischen einer offenen und einer geschlossenen Position bewegbar ist, um den Durchgang (17) zu verschließen;
wobei der Verschluss eine zweite Kammer (7) beinhaltet, die von der ersten Kammer (1) durch eine Sperrwand getrennt ist, die öffnungsfähig ist, um Materialfluss zwischen der ersten und der zweiten Kammer zu erlauben, und wobei die zweite Kammer (7) integral mit dem Bund gebildet ist und teilweise den Durchgang verschließt; **dadurch gekennzeichnet, dass** die zweite Kammer (7) eine Oberwand (6) der zweiten Kammer beinhaltet, die bei Verwendung niederdrückbar ist, um die Sperrwand zu brechen, wobei die Sperrwand dazu konfiguriert ist, durch einen steigenden Fluiddruck in der zweiten Kammer (7), der durch Niederdrücken der Oberwand (6) der zweiten Kammer erzeugt wird, zu brechen.

2. Behälteranordnung nach Anspruch 1, wobei eine Behälterdichtung (13) die Behälteröffnung abdichtet.

3. Behälteranordnung nach Anspruch 1 oder Anspruch 2, wobei die Behälterseitenwand (4) eine erste Gewindeverbindung beinhaltet, die die Öffnung umgibt, und der Bund eine zweite Gewindeverbindung beinhaltet, die mit der ersten Gewindeverbindung gekoppelt ist.

## Revendications

1. Ensemble récipient (10) comportant :
un récipient (16) comprenant une première chambre formée d'une paroi de base (12) et d'une paroi latérale (4) de récipient qui s'étend à partir de la paroi de base (12) pour entourer la première chambre (1), la paroi latérale (4) de récipient délimitant une ouverture (11) à l'intérieur de la première chambre (1) ;
une fermeture (2) attachée à l'ouverture (11), la fermeture incluant un col entourant un passage (17) qui s'étend à travers l'ouverture vers la première chambre (1), le col comprenant un couvercle (9) relié de manière articulée qui est mobile entre une position ouverte et une position fermée pour fermer le passage (17) ;
dans lequel la fermeture inclut une seconde chambre (7) séparée de la première chambre (1) par une paroi barrière qui peut être ouverte afin de permettre un écoulement de substance entre les première et seconde chambres et dans lequel la seconde chambre (7) est formée d'un seul tenant avec le col et ferme partiellement le passage ; **caractérisé en ce que** la seconde chambre (7) inclut une paroi de dessus (6) de seconde chambre qui peut être enfoncée, lors de l'utilisation, pour rompre la paroi barrière, ladite paroi barrière étant conçue pour se rompre en raison d'une augmentation de pression de fluide dans la seconde chambre (7) générée par un enfoncement de la paroi de dessus (6) de seconde chambre.

2. Ensemble récipient selon la revendication 1, dans lequel un joint (13) de récipient scelle l'ouverture de récipient.

3. Ensemble récipient selon la revendication 1 ou la revendication 2, dans lequel la paroi latérale (4) de récipient inclut un premier raccord fileté entourant l'ouverture et le col inclut un second raccord fileté accouplé au premier raccord fileté.
